# EUROPÄISCHE PATENTSCHRIFT

(11) **EP 1 594 715 B1**
(45) Veröffentlichungstag und Bekanntmachung des Hinweises auf die Patenterteilung: **28.02.2007**
(21) Anmeldenummer: 04707156.8
(22) Anmeldetag: 31.01.2004
(51) Int. Cl.: B60W 10/02, B60W 10/10

(54) **VERFAHREN ZUR ANLEGEPUNKTBESTIMMUNG DER KUPPLUNG EINES AUTOMATISIERTEN SCHALTGETRIEBES**
METHOD FOR DETERMINING A POINT OF APPLICATION OF THE CLUTCH FOR AN AUTOMATIC GEARBOX
PROCEDE POUR DETERMINER LE POINT D'APPLICATION DE L'EMBRAYAGE D'UNE BOITE DE VITESSE AUTOMATIQUE

(30) Priorität: 19.02.2003 DE 10306934
(43) Veröffentlichungstag der Anmeldung: 16.11.2005
(73) Patentinhaber: ZF FRIEDRICHSHAFEN Aktiengesellschaft, 88038 Friedrichshafen (DE)
(72) Erfinder: BUCHHOLD, Oliver, 88693 Deggenhausertal (DE)
(86) Internationale Anmeldenummer: PCT/EP2004/000864
(87) Internationale Veröffentlichungsnummer: WO 2004/074025

(56) Entgegenhaltungen:
- EP-A- 0 512 727
- US-A- 5 993 352
- US-A1- 2002 038 747
- US-A1- 2002 137 596

## Beschreibung

Die Erfindung betrifft ein Verfahren zur Anlegepunktbestimmung einer Kupplung eines automatisierten Schaltgetriebes mit nicht synchronisiertem Rückwärtsgang nach dem Oberbegriff des Patentanspruchs 1.

Das erfindungsgemäße Verfahren ist demnach bei automatisierten Schaltgetrieben mit automatisierten Kupplungs- und Getriebeschaltfunktionen nutzbar, die in Kraftfahrzeugen eingesetzt werden. Ein derartiges automatisiertes Schaltgetriebe verfügt über Betätigungsvorrichtungen für die Auswahl von Getriebewählgassen und von Getriebeschaltgassen, mit denen eine Schalt- oder Wählhebelbetätigung in entsprechende Schalt- oder Wählvorgänge am Getriebe umgesetzt werden.

Zudem ist eine weitere Betätigungsvorrichtung für eine mit dem Getriebe antriebstechnisch verbundene Schalt- und Anfahrkupplung vorhanden, die bei Gangwechselvorgängen zum Öffnen und Schließen der Kupplung in Betrieb gesetzt wird. Die genannten Betätigungsvorrichtungen sind dabei so ausgebildet, dass diese hydraulisch, pneumatisch oder elektrisch betätigt werden können.

Außerdem ist an einer solchen Kupplung beziehungsweise Betätigungsvorrichtung ein Sensor zur Bestimmung der Kupplungsposition oder des Kupplungsstellweges angeordnet, mit dem die Position oder der Stellweg des bewegbaren Teils der Kupplung und/oder der Kupplungsbetätigungsvorrichtung ermittelbar ist.

Schließlich verfügt ein solches Getriebe über ein elektronisches Steuerungs- und Regelungsgerät, das üblicherweise als Mikrocomputer ausgebildet ist und mit den genannten Sensoren und Betätigungseinrichtungen über Sensor- und Steuerleitungen in Verbindung steht sowie vorzugsweise einen Datenaustausch mit einem Motorsteuerungsgerät betreiben kann.

Derartige automatisierte Schaltgetriebe bieten vor allem dann einen guten Schaltkomfort, wenn das Steuerungs- und Regelungsgerät diejenige Kupplungsposition möglichst genau kennt, bei der die Kupplung soweit in Schließstellung gebracht ist, dass eine Drehmomentübertragung gerade beginnt.

Diese Kupplungsposition, oder eine Kupplungsposition mit einem zuvor festgelegten Abstand zu der erstgenannten Position, wird im Folgenden als Anlegepunkt bezeichnet. Diese Kupplungsposition kann sich kurz- oder langfristig durch thermische Ausdehnung der Kupplungsbauteile oder durch Verschleiß der Kupplungsbeläge verschieben. Es ist daher notwenig, den Anlegepunkt während des Betriebes beziehungsweise während der Lebensdauer der Kupplung oder des Fahrzeuges kontinuierlich zu überwachen und die Kupplungssteuerung gegebenenfalls entsprechend der Veränderungen anzupassen.

Zur Bestimmung des Anlegepunktes existieren eine Vielzahl von Vorschlägen. Bei den weiteren Betrachtungen im Zusammenhang mit der vorliegenden Erfindung werden jedoch solche Verfahren nicht beachtet, bei denen ein Getriebeeingangsdrehzahlsensor benötigt wird, da auf einen solchen, eine antriebsmotorbezogene Größe messenden Sensor bei der Erfindung aufgabengemäß verzichtet werden soll.

Ohne einen derartigen Getriebeeingangsdrehzahlsensor kommt zum Beispiel das in der DE 196 30 014 A1, bzw. US 5 993 352, beschriebene gattungsgemäße Verfahren aus. Bei diesem bekannten Verfahren wird der Anlegepunkt durch Anlegen der Kupplung bei geschaltetem Getriebegang im Fahrzeugstillstand bei betätigter Bremse durch Beobachtung des Motordrehmoments bestimmt. Durch das Schließen der Kupplung wird die Motordrehzahl reduziert, was eine deutliche Erhöhung des Motordrehmoments gesteuert durch einen Leerlaufdrehzahlregler zur Folge hat. Der Wegpunkt beim Schließen der Kupplung, bei dem das Motordrehmoment einen vordefinierten Schwellwert des Motordrehmoments überscheitet, wird dann als Anlegepunkt erkannt und in einem Steuergerät abgespeichert.

Weiterhin ist aus der WO 01/98679 A1 ein Verfahren bekannt, bei dem ein Kriechmoment durch langsames Schließen der Kupplung erzeugt wird. Während des Kriechvorgangs wird dazu kontinuierlich das Motordrehmoment überwacht. Der Kupplungswegpunkt, bei dem eine deutliche Veränderung des Motordrehmoments beobachtet wird, wird dann als der aktuelle Anlegepunkt bestimmt.

Diese bekannten Verfahren basieren auf Sensorsignale, die auf den Antriebsmotor des Fahrzeuges bezogen sind. Damit sind diese Verfahren von der Genauigkeit dieser Signale abhängig, was in der Praxis nicht zu vollständig befriedigenden Ergebnissen führt. Vielmehr ist es wünschenswert, wenn die Bestimmung des Anlegepunktes mit kupplungs- oder getriebebezogenen Größen erfolgen kann.

Die Aufgabe der Erfindung ist es daher, zur Verbesserung der Genauigkeit der Bestimmung des Anlegepunktes der Kupplung diesen ohne motorbezogene Sensorinformationen zu ermitteln.

Die Lösung dieser Aufgabe ergibt sich aus dem Hauptanspruch, während vorteilhafte Ausgestaltungen und Weiterbildungen der Erfindung den Unteransprüchen entnehmbar sind.

Gemäß der Erfindung ist daher zur Verbesserung der Bestimmung des Anlegepunktes sowie zur Vermeidung der Nutzung von motorbezogenen Sensorinformationen vorgesehen, dass der Anlegepunkt als derjenige Punkt im Kupplungsschließweg bestimmt wird, bei dem das von der Kupplung übertragene Drehmoment groß genug ist, um in einer Zahn-auf-Zahn-Stellung die Zähne einer Schiebemuffe gegen die Zähne eines Kupplungskörpers eines Rückwärtsgangzahnrades zu verschieben. Die Zahn-auf-Zahn-Stellungen ergeben sich üblicherweise bei Stillstand des Fahrzeugs.

Bevorzugt ist dazu ein Steuerungsverfahren vorgesehen, bei dem in einem ersten Verfahrensschritt die Kupplung geöffnet wird. In einem nächsten Schritt wird dann gesteuert von einem Steuerungs- und Regelungsgerät ein synchronisierter Vorwärtsgang soweit und solange eingelegt, bis die Eingangs- bzw. Vorgelegewelle des Getriebes in ihrer Drehzahl auf einen Wert von Null oder nahe Null abgebremst ist. Sodann wird eine einem Rückwärtsgangzahnrad zugeordnete Rückwärtsgangschiebemuffe auf einer Getriebewelle axial soweit verschoben, bis diese an einem Rückwärtsgangkupplungskörper des Rückwärtsgangzahnrades mechanisch anliegt oder mit diesem eine Verzahnungsverbindung eingeht.

In dem nächsten Verfahrensschritt wird dann von dem Steuerungs- und Regelungsgerät geprüft, ob die Rückwärtsgangschiebemuffe mit dem Rückwärtsgangkupplungskörper verzahnt und damit der Rückwärtsgang eingelegt ist. Sofern dies der Fall ist, kann die Anlegepunktbestimmung bei diesem Verfahrenslauf nicht festgestellt werden, so dass das Verfahren beendet oder nach dem Herausnehmen des Rückwärtsganges von neuem gestartet wird.

In dem Fall, bei dem der Rückwärtsgang nicht eingelegt ist sondern die Zahnköpfe der Schiebemuffe in Zahn-auf-Zahn-Stellung an den Zahnköpfen des Kupplungskörpers des Rückwärtsgangzahnrades anliegen, erfolgt sodann das Schließen der Kupplung bis zu einem in dem Steuerungs- und Regelungsgerät abgespeicherten vermuteten oder beim letzten Mal gemessenen Anlegepunkt.

Wenn sich bei der dann anschließend durchgeführten Prüfung ergibt, dass die Rückwärtsgangschiebemuffe mit dem Rückwärtsgangkupplungskörper verzahnt und damit der Rückwärtsgang eingelegt ist, wird dieser Anlegeort oder der Stellweg der Kupplung bis zu diesem Anlegepunkt in dem Steuerungs- und Regelungsgerät gespeichert und für die später folgenden Kupplungsbetätigungs- und Anlegepunktbestimmungsvorgänge bereitgehalten.

Sofern der Rückwärtsgang jedoch noch nicht eingelegt ist, erfolgt solange ein weiteres Schließen der Kupplung und ein dazu paralleles Prüfen, ob der Rückwärtsgang eingelegt ist, bis der Anlegepunkt gefunden ist.

Dieses Verfahren zur Anlegepunktbestimmung wird Sinnvollerweise bei stillstehendem Fahrzeug und laufendem Antriebsmotor durchgeführt. Zudem ist in einer vorteilhaften Ausgestaltung der Erfindung vorgesehen, dass das Schließen der Kupplung bei dieser Anlegepunktbestimmung nicht kontinuierlich sondern in kleinen Schritten erfolgt, zwischen denen ein vorbestimmter Zeitabschnitt liegt. Durch dieses inkrementelle Verstellen der Kupplung kann insbesondere in der Phase des Anliegens der Rückwärtsgangschiebemuffe an dem Rückwärtsgangkupplungskörper in der Zahn-auf-Zahn-Stellung zwischen zwei vergleichsweise kleinen Zustellschritten der Kupplungsbetätigungsvorrichtung jeweils geprüft werden, ob das dann gerade von der Kupplung übertragene Drehmoment ausgereicht hat, um die Schiebemuffe gegen die Rückwärtsgangkupplungskörper soweit zu verschieben, dass deren Verzahnungen nicht mehr aufeinander stehen, sondern der Rückwärtsgang eingelegt ist. Die Länge der Kupplungsschließschritte ist dabei diejenige Größe, von der die Feststellgenauigkeit des Anlegepunkts abhängt.

Sinnvollerweise wird dieses Verfahren dann durchgeführt, wenn dem Steuerungs- und Regelungsgerät von Sensoren an einer Getriebewähl- oder Getriebeschaltvorrichtung mitgeteilt wurde, dass das Getriebe in den Leerlauf beziehungsweise in die Fahrstufe N geschaltet werden soll, oder wenn sich das Getriebe bereits in dieser Leerlaufstellung befindet. Bei solchen Bedingungen kann die Kupplung bei dem zur Leerlaufstellung des Getriebes führenden Betätigungsvorgang gleich geöffnet bleiben, um direkt im Anschluss daran die Bestimmung des Kupplungsanlegepunktes wie oben dargelegt durchzuführen.

In anderen Ausgestaltungen des Verfahrens kann vorgesehen sein, dass die Anlegepunktbestimmung bei jedem Rückwärtsgangschaltvorgang oder in zyklischen oder azyklischen Abständen unabhängig von der Durchführung eines konkreten Rückwärtsgangschaltvorgangs durchgeführt wird. Die dafür notwenige Zeit ist in der Regel zu Beginn von Rückwärtsfahrsituationen vorhanden, da der Fahrer eines derart ausgerüsteten Fahrzeuges bei Rückwärtsfahrten sowieso auf langsamere und genauere Fahr- und Schalt- bzw. Kupplungsbetätigungsvorgänge eingestellt ist.

Eine regelmäßige Durchführung der Anlegepunktbestimmung hat den Vorteil, dass stets der aktuelle Anlegepunkt der Kupplung bekannt ist und so besonders schnell und komfortabel die Kupplung geschaltet werden kann. Eine zyklische Anlegepunktbestimmung erfolgt dabei vorzugsweise in vorgegebenen Zeit- oder Fahrstreckenintervallen, deren Zykluslänge sich beispielsweise aus Kupplungsverschleißerfahrungswerten ergeben kann.

Schließlich wird es bevorzugt, dass das Verfahren sofort abgebrochen wird, wenn dem Steuerungs- und Regelungsgerät durch Sensorinformationen die Anforderung nach einem anderen Übersetzungsänderungsvorgang mitgeteilt wird. Auf diese Weise wird ein durch den Fahrer oder das Fahrverhalten aktuell angeforderter Schaltvorgang nicht unnötig verzögert. Im übrigen kann das Verfahren zur Anlegepunktbestimmung jedoch im Hintergrund arbeiten, so dass der Fahrer eines solchermaßen ausgestatteten Fahrzeuges von der Durchführung dieses Verfahrens nicht merkt.

Zum besseren Verständnis der Erfindung ist der Beschreibung eine Zeichnung beigefügt.

In dieser zeigen in schematischer Darstellung
- Fig. 1: eine radiale Draufsicht auf einen Rückwärtsgangkupplungskörper sowie auf eine Schiebemuffe in Zahn-auf-Zahn-Stellung,
- Fig. 2: die Kräfte an einem Zahn der Schiebemuffe,
- Fig. 3: ein Diagramm zum zeitlichen Verlauf der Kupplungsschließposition und
- Fig. 4: ein Ablaufdiagramm zur Durchführung des Verfahrens zur Anlegepunktbestimmung.

Bei dem hier vorgestellten Ausführungsbeispiel der Erfindung wird davon ausgegangen, dass die Anlegepunktbestimmung der Kupplung bei einem automatisierten Schaltgetriebe erfolgt, welches über keinen synchronisierten Rückwärtsgang verfügt. Eine solche Getriebekonfiguration ist keineswegs unüblich, da gerade bei Getrieben mit automatisch ablaufenden Ein- und Auskuppelvorgängen die Gangschaltvorgänge derart feinsinnig gesteuert ablaufen können, dass auf die zusätzlichen Herstellkosten für Synchronisationsvorrichtungen für den Rückwärtsgang problemlos verzichtet werden kann.

Das getriebeseitige Einlegen eines nicht synchronisierten Rückwärtsganges erfolgt üblicherweise bei stillstehender Getriebeausgangs- und/oder Getriebevorgelegewelle, um eine stoßartige Drehzahlangleichung mit unschönen Schaltgeräuschen zwischen den an dem Schaltvorgang beteiligten Getriebebauteilen zu vermeiden.

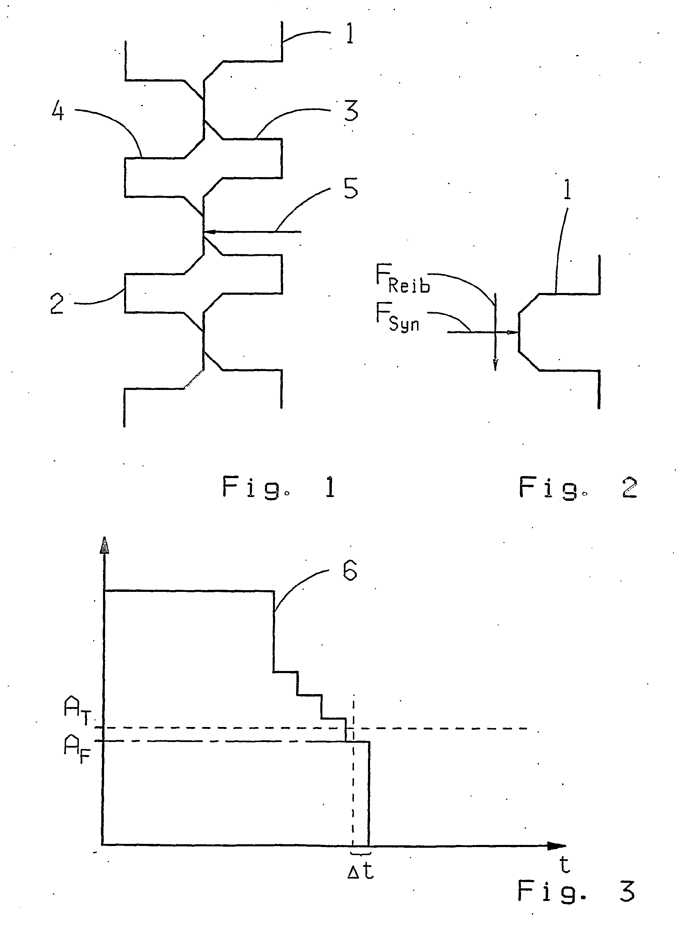

Wie Fig. 1 zeigt, wird bei einem solchen getriebeseitigen Einlegen des Rückwärtsgangs üblicherweise ein auf einer Getriebewelle drehbar gelagertes Rückwärtsgangzahnrad mittels einer Schiebemuffe 1 drehfest mit der Getriebewelle verbunden, wobei die Schiebemuffe 1 auf dieser Welle drehfest und axial verschieblich angeordnet ist.

Um eine mechanische Verbindung des Rückwärtsganglosrades mit der Schiebemuffe 1 herzustellen, verfügen diese beiden Getriebebauteile über klauenartige Kupplungskörper, die ineinander greifen und eine drehfeste Verbindung miteinander eingehen können.

Wenn bei solchen Getrieben getriebeseitig ein nicht synchronisierter Rückwärtsgang eingelegt werden soll, wird die Schiebemuffe 1 in Richtung des Pfeils 5 zu dem Kupplungskörper 2 des Rückwärtsgangzahnrades mit einer bestimmten Stellkraft F_{Syn} verschoben. Dabei tritt nicht selten die Situation auf, dass sich die Klauen 3 der Schiebemuffe 1 und die Klauen 4 des Kupplungskörpers 2 des Rückwärtsgangzahnrades in einer in Fig. 1 dargestellten Zahn-auf-Zahn-Stellung befinden.

Das getriebeseitige Einlegen des Rückwärtsganges kann in einer solchen Situation dadurch erfolgen, dass die bis dahin geöffnete Kupplung teilweise geschlossen wird, so dass gegebenenfalls ein Drehmoment auf die Getriebewelle gebracht wird, auf der die Schiebemuffe 1 und das Rückwärtsgangrad angeordnet sind. Sofern die durch dieses Drehmoment erzeugte Verstellkraft größer als die Reibkraft F_{Reib} an den aufeinander liegenden Klauen 2, 4 ist, können die Klauen 3 der Schiebemuffe 1 gegen die Klauen 2 des Kupplungskörpers 4 des Rückwärtsgangzahnrades verdreht werden.

Wie Fig. 2 zeigt, reicht bei einer geringen Anlegekraft 5 der Schiebemuffe 1 auch ein vergleichsweise geringes Kupplungsdrehmoment aus, um die Klauen 2, 4 zur Auflösung der Zahn-auf-Zahn-Stellung gegeneinander zu verdrehen und schließlich die Verzahnung einspuren zu lassen. Dieser Einlegevorgang wird dann durch einen geeigneten Sensor festgestellt und dem Steuerungs- und Regelungsgerät mitgeteilt.

Diese Zusammenhänge machen deutlich, dass sich der Anlegepunkt der Kupplung als die Kupplungsstellung definieren lässt, bei der ein derart großes Losbrechdrehmoment übertragen wird, dass ausreicht, um die oben beschriebene Zahn-auf-Zahn-Stellung aufzulösen.

Die Ermittlung dieses Losbrechmomentes beziehungsweise die Ermittlung des Anlegepunktes der Kupplung lässt sich sehr anschaulich mit Hilfe von Fig. 3 verdeutlichen. In dieser Darstellung ist der zeitliche Verlauf der Kupplungsschließposition 6 bei einem Anlegepunktbestimmungsvorgang aufgetragen. Hierbei wird davon ausgegangen, dass beim getriebeseitigen Einlegen des Rückwärtsganges der Verbrennungsmotor des Fahrzeugs läuft und sich das Fahrzeug im Stillstand befindet.

In einem ersten Schritt wird die Kupplung geöffnet und die Getriebeeingangswelle und/oder die Vorgelegewelle des Getriebes durch getriebeseitiges Einlegen des synchronisierten ersten Ganges mittels an sich bekannter Synchronisierbauteile bis zum Stillstand abgebremst. Anschließend wird die dem Rückwärtsgangzahnrad zugeordnete Schiebemuffe 1 auf ihrer Getriebewelle axial mit geringer Kraft verschoben und an den Kupplungskörper 2 des Rückwärtsgangzahnrades angelegt.

Sofern die Schiebemuffe 1 in die Schaltverzahnung des Kupplungskörpers 2 einspurt, ohne dass es zu einer Zahn-auf-Zahn-Stellung kommt, wird der Vorgang ohne die Bestimmung des Anlegepunktes der Kupplung beendet. Lässt sich der Rückwärtsgang wegen einer Zahn-auf-Zahn-Stellung der Klauenzähne 3, 4 jedoch nicht einlegen, so wird die Kupplung gemäß Fig. 3 in einem ersten Schritt soweit geschlossen, wie es von einem vordefinierten und in dem Steuerungs- und Regelungsgerät abgespeicherten Stellweg vorgegeben ist.

Dieses Schließen der Kupplung erfolgt vorzugsweise stufenförmig, so dass zwischen jeder weiteren Schließbewegung des die Kupplung schließenden Betätigungsmittels genügend Zeit bleibt, um mittels eines geeigneten Sensors festzustellen, ob das gerade eingestellte übertragbare Drehmoment ausreicht, um die Kupplungskörperzähne 3, 4 aus ihrer Zahn-auf-Zahn-Stellung loszubrechen. Sobald dieses Losbrechdrehmoment erreicht ist, werden die Kupplungskörperzähne 3, 4 gegeneinander verschoben und die Verzahnung 3 der Schiebemuffe 1 in die Verzahnung 4 des Kupplungskörpers 2 eingeschoben. Die zu diesem Zeitpunkt eingestellte Kupplungsschließposition ist dann der gesuchte aktuelle Anlegepunkt der Kupplung.

Wie Fig. 3 verdeutlicht, kann es wegen der inkrementellen Einstellung des Kupplungsschließweges in Einzelfällen vorkommen, dass der tatsächliche Anlegepunkt A_{T} um einen geringen Betrag von dem festgestellten Anlegepunkt A_{F} abweicht und auch ein zeitlicher Abstand Δt zwischen der tatsächlichen und der festgestellten Aufhebung der Zahn-auf-Zahn-Stellung der Kupplungskörper vorliegt. Dieser gelegentlich auftretende Fehler bei der Anlegepunktbestimmung ist aber im Vergleich zu der mit bisher bekannten Mitteln erreichbaren Genauigkeit vernachlässigbar gering.

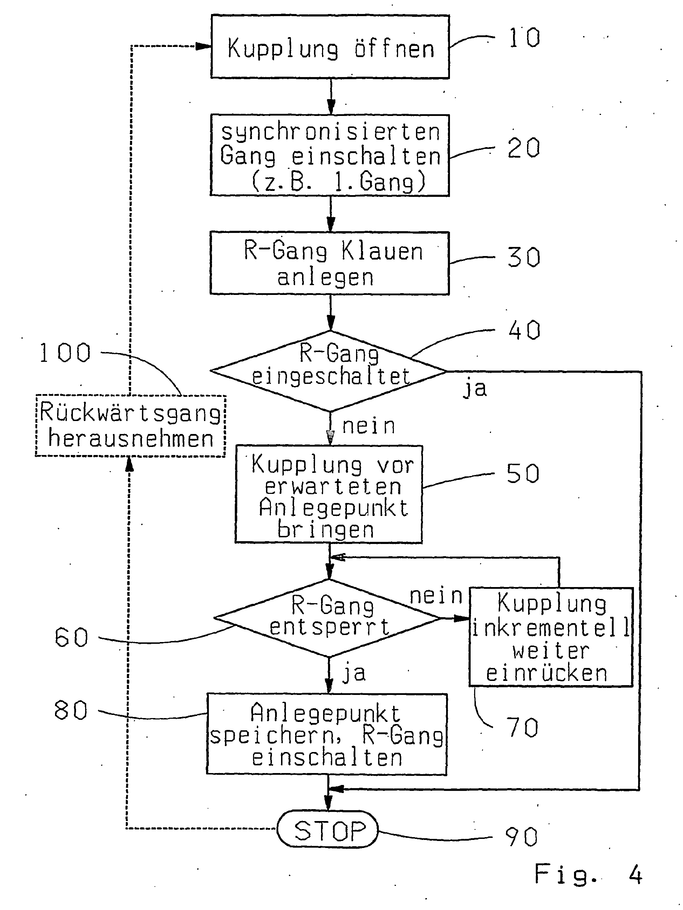

Der in Fig. 3 sowie in dem Ablaufplan gemäß Fig. 4 gezeigte Vorgang zur Bestimmung des Anlegepunktes einer Kupplung wird vorzugsweise so durchgeführt, dass dabei nicht explizit der Rückwärtsgang durch den Fahrer oder das Steuerungs- und Regelungsgerät angewählt werden muss. Vielmehr kann das Steuerungs- und Regelungsgerät einen solchen Vorgang zur Anlegepunktbestimmung immer dann vom Fahrer unbemerkt durchführen, wenn sich das Fahrzeug vorzugsweise im Stillstand befindet und das Getriebe in die Leerlauf- oder Neutral-Position geschaltet ist.

Wie der Ablaufplan in Fig. 4 verdeutlicht, wird in einem ersten Verfahrensschritt 10 die Kupplung geöffnet, um dann in einem zweiten Verfahrensschritt 20 zum Abbremsen einer Getriebeeingangs- bzw. Getriebevorgelegewelle einen synchronisierten Gang einzulegen und anschließend wieder herauszunehmen.

Sodann erfolgt im nächsten Verfahrensschritt 30 ein Verschieben der Rückwärtsgangschiebemuffe 1 auf deren Getriebewelle, bis diese an einem Kupplungskörper 2 des Rückwärtsgangzahnrades anliegt oder eine Verzahnung mit dieser eingeht.

Im nächsten Schritt 40 wird dann geprüft, ob die Schiebemuffe 1 mit dem Rückwärtsgangkupplungskörper 2 verzahnt und damit der Rückwärtsgang eingelegt ist. Sofern der Rückwärtsgang eingelegt ist, wird die Anlegepunktbestimmung abgebrochen (Schritt 90) oder gegebenenfalls nach Herausnehmen des Rückwärtsganges durch Zurückschieben der Schiebemuffe 1 (Schritt 100) die Kupplung erneut geöffnet und der Anlegepunktbestimmungsvorgang mit Schritt 10 erneut durchgeführt.

Wenn der Rückwärtsgang dagegen nicht eingelegt ist, stehen die Zähne 3, 4 von Schiebemuffe 1 und Kupplungskörper 2 in einer Zahn-auf-Zahn-Stellung einander gegenüber, so dass in einem nächsten Schritt 50 ein Schließen der Kupplung bis zu dem vorbestimmten erwarteten Anlegepunkt erfolgt.

Sofern eine im Verfahrensschritt 60 durchgeführte Prüfung hinsichtlich der Entsperrung des Rückwärtsganges zeigt, dass der Rückwärtsgang noch nicht eingelegt ist, erfolgt ein weiteres Schließen der Kupplung (Schritt 70) und eine anschließende erneute Prüfung des o.g. Sperrzustandes (Verfahrensschritt 60).

Wenn die Prüfung im Verfahrensschritt 60 ergibt, dass die Schiebemuffe 1 mit dem Kupplungskörper 2 verzahnt ist und damit der Rückwärtsgang eingelegt ist, wird in einem Verfahrensschritt 80 der Anlegepunkt oder der Stellweg der Kupplung bis zum Anlegepunkt in dem Steuerungs- und Regelungsgerät gespeichert. Anschließend wird die Anlegepunktbestimmung abgebrochen (Schritt 90) oder gegebenenfalls nach Herausnehmen des Rückwärtsganges durch Zurückschieben der Schiebemuffe 1 (Schritt 100) die Kupplung mit Verfahrensschritt 10 geöffnet und der Anlegepunktbestimmungsvorgang erneut durchgeführt.

Diese Vorgänge zur Anlegepunktbestimmung können periodisch oder aperiodisch erfolgen, wobei periodische Anlegepunktbestimmungen vorzugsweise in vorgegebenen Zeitintervallen oder nach bestimmten Fahrstrecken durchgeführt werden.

Vorzugsweise ist ein solcher Anlegepunktbestimmungsvorgang dann von dem Steuerungs- und Regelungsgerät abzubrechen, wenn der Fahrer des Fahrzeuges oder eine übergeordnete Getriebesteuerungsfunktion das Einschalten eines anderen Getriebeganges anfordert.

Das erfindungsgemäße Verfahren zur Anlegepunktbestimmung zeichnet sich dadurch aus, dass es ausschließlich mit Sensorsignalen auskommt, die im Getriebe und an der Kupplung beziehungsweise deren Stellmittel gewonnen werden. Damit gibt es keine Abhängigkeit von getriebeexternen Signalquellen, die gegebenenfalls fehlerhaft sind und deren Serienstoleranzen durch den Getriebe- oder Kupplungshersteller nicht beeinflusst werden können.

Außerdem hängt das erfindungsgemäße Verfahren nicht von der Umgebungstemperatur und dem Luftdruck ab, wobei diese Größen bei üblichen Anlegepunktbestimmungsverfahren mit motorbezogenen Messgrößen beeinflussen.

Zudem kann der Anlegepunkt mit dem erfindungsgemäßen Verfahren sehr genau bestimmt werden, weil bei geringer Anlegekraft der Schiebemuffe an den Kupplungskörper des Rückwärtsgangrades auch ein sehr geringes Kupplungsmoment ausreicht, um die Zahn-auf-Zahn-Stellung aufzuheben. Die inkrementellen Kupplungsstellwege könne dabei sehr fein abgestuft sein, so dass die Genauigkeit, mit der der Anlegepunkt bestimmt wird, deutlich besser ist als mit bisher bekannten Verfahren.

### Bezugszeichen

- 1: Schiebemuffe
- 2: Kupplungskörper Rückwärtsgang
- 3: Schiebemuffenzahn
- 4: Kupplungskörperzahn
- 5: Einlegerichtung
- 6: Kupplungsstellweg
- 10: Kupplung öffnen
- 20: synchronisierten Gang zum Abbremsen der Getriebeeingangs- bzw. Vorgelegewelle einlegen und anschließend herausnehmen
- 30: Rückwärtsgangschiebemuffe verschieben bis zum Anlegen an einen Rückwärtsgangkupplungskörper
- 40: Prüfen, ob Rückwärtsgangschiebemuffe mit dem Rückwärtsgangkupplungskörper verzahnt und damit Rückwärtsgang eingelegt ist
- 50: Kupplung bis zum erwarteten Anlegepunkt schließen
- 60: Prüfen, ob Rückwärtsgangschiebemuffe durchgeschaltet und Rückwärtsgang eingelegt ist
- 70: Verschieben der Schiebemuffe weiter in Richtung zum Rückwärtsgangkupplungskörper
- 80: Anlegepunkt oder Verstellweg der Kupplung speichern
- 90: Stopp
- 100: Herausnehmen des Rückwärtsgangs
- A_{F}: Festgestellter Anlegepunkt
- A_{T}: Tatsächlicher Anlegepunkt
- t: Zeit
- Δt: Zeitabschnitt
- F_{Reib}: Reibkraft
- F_{Syn}: Anlegekraft der Schiebemuffe

## Patentansprüche

1. Verfahren zur Bestimmung des Anlegepunktes im Schließweg einer Kupplung eines automatisierten Schaltgetriebes mit nicht synchronisiertem Rückwärtsgang, bei dem die Kupplung beginnt, ein Drehmoment zu übertragen, **dadurch gekennzeichnet, dass** der Anlegepunkt als derjenige Punkt im Kupplungsschließweg bestimmt wird, bei dem das von der Kupplung übertragene Drehmoment groß genug ist, um in einer Zahn-auf-Zahn-Stellung die Zähne (3) einer Schiebemuffe (1) gegen die Zähne (4) eines Kupplungskörpers (2) eines Rückwärtsgangzahnrades zu verschieben.

2. Verfahren nach Anspruch 1, **gekennzeichnet durch** folgende Verfahrensschritte:
- Kupplung öffnen (Schritt 10);
- Einlegen und anschließendes Herausnehmen eines synchronisierten Ganges zum Abbremsen einer Getriebeeingangs- bzw. Getriebevorgelegewelle (Schritt 20);
- Verschieben einer Rückwärtsgangschiebemuffe auf einer Getriebewelle bis zu deren Anlegen an einen mit einem Rückwärtsgangzahnrad verbundenen Rückwärtsgangkupplungskörper (Schritt 30);
- Prüfen, ob die Rückwärtsgangschiebemuffe mit dem Rückwärtsgangkupplungskörper verzahnt und damit der Rückwärtsgang eingelegt ist (Schritt 40);
- wenn der Rückwärtsgang eingelegt ist, Verzweigung zu Schritt 90;
- wenn der Rückwärtsgang nicht eingelegt ist, Schließen der Kupplung bis zu einem vorbestimmten Anlegepunkt (Schritt 50);
- Prüfen, ob die Rückwärtsgangschiebemuffe mit dem Rückwärtsgangkupplungskörper verzahnt und damit der Rückwärtsgang eingelegt ist (Schritt 60);
- wenn der Rückwärtsgang noch nicht eingelegt ist, weiteres Schließen der Kupplung (Schritt 70) und verzweigen zu Schritt 60;
- wenn der Rückwärtsgang eingelegt ist, speichern dieses Anlegepunktes oder des Stellweges der Kupplung bis zum Anlegepunkt (Schritt 80);
- Stopp (Schritt 90) oder
- Herausnehmen des Rückwärtsganges und Verzweigen zum Schritt 10 zur erneuten Durchführung des Verfahrens (Schritt 100).

3. Verfahren nach Anspruch 1 oder Anspruch 2, **dadurch gekennzeichnet, dass** das Schließen der Kupplung zumindest in Verfahrensschritt (60) in kleinen Schritten erfolgt.

4. Verfahren nach wenigstens einem der Ansprüche 1 bis 3, **dadurch gekennzeichnet, dass** dieses bei stillstehendem Fahrzeug und laufendem Antriebsmotor durchgeführt wird.

5. Verfahren nach Anspruch 4, **dadurch gekennzeichnet, dass** dieses dann durchgeführt wird, wenn dem Steuerungs- und Regelungsgerät von Sensoren an einer Getriebewähl- oder Getriebeschaltvorrichtung mitgeteilt wird, dass das Getriebe in den Leerlauf beziehungsweise in die Fahrstufe N geschaltet werden soll oder sich das Getriebe bereits in dieser Leerlaufstellung befindet.

6. Verfahren nach wenigstens einem der Ansprüche 1 bis 5, **dadurch gekennzeichnet, dass** dieses bei jedem Rückwärtsgangschaltvorgang durchgeführt wird.

7. Verfahren nach wenigstens einem der Ansprüche 1 bis 5, **dadurch gekennzeichnet, dass** dieses in zyklischen oder azyklischen Abständen unabhängig von der Durchführung eines konkreten Rückwärtsgangschaltvorgangs durchgeführt wird.

8. Verfahren nach Anspruch 7, **dadurch gekennzeichnet, dass** der Zyklus auf der Zeit oder auf der Fahrstrecke basiert.

9. Verfahren nach wenigstens einem der vorherigen Ansprüche, **dadurch gekennzeichnet, dass** das Verfahren sofort abgebrochen wird, wenn dem Steuerüngs- und Regelungsgerät die Anforderung nach einem anderen Übersetzungsänderungsvorgang mitgeteilt wird.

## Claims

1. Procedure for determining the specific point of application (lay-on point) in the clutch's closing stroke for an automated manual transmission with a non-synchronized reverse gear where the clutch starts to transfer a torque that is **characterized in that** the lay-on point is determined to be the respective point in the clutch's closing stroke where the torque transferred by the clutch is big enough in order to move the teeth (3) in a tooth-on-tooth position of a sliding sleeve (1) against the teeth (4) of reversing gear's clutch body (2).

2. Method according to claim 1, **characterized by** the following steps of procedure:
- Open clutch (step 10);
- Engaging and subsequent disengaging of a synchronized gear for decelerating a transmission input shaft and/or transmission countershaft (step 20);
- Shifting of a reverse gear sliding sleeve on a transmission shift up to its abutment with the reverse gear clutch body connected to the reverse gear (step 30);
- Inspecting whether the reverse gear sliding sleeve is meshing (interlocked) with the reverse gear clutch body and if thereby, the reverse gear is engaged (step 40);
- if thereby, the reverse gear is engaged then branching to step 90;
- if the reverse gear is not engaged then close the clutch up to the pre-determined lay-on point (step 50);
- Inspecting whether the reverse gear sliding sleeve is meshing (interlocked) with the reverse gear clutch body and if thereby, the reverse gear is engaged (step 60)
- if the reverse gear is not yet engaged, further closing of clutch (step 70) and branching off to step 60;
- if the reverse gear is engaged, save information on lay-on point or of positioning travel of clutch up to lay-on point (step 80);
- Stop (step 90) or
- Disengaging of reverse gear and branching off to step 10 for renewed implementation of steps of procedure (step 100).

3. Procedure in accordance with claim 1 or 2,
**characterized in that** the procedure's step (60) at least takes place in small steps for the closing of the clutch.

4. Procedure in accordance with at least either claim 1 or 3,
**characterized in that** this procedure is implemented with a vehicle in stationary position and with the engine (drive motor) running.

5. Procedure according to claim 4, **characterized in that** the present procedure will only be conducted if information is passed on via the sensor system at the transmission selector or transmission shift facility to the control and regulating device about the transmission already being in the state of idle operation and/or driving mode N or that the transmission must be shifted into idle operation and/or driving mode N.

6. Procedure in accordance with at least either claim 1 or 5,
**characterized in that** this procedure is implemented for every reverse gear process.

7. Procedure in accordance with at least either claim 1 or 5,
**characterized in that** this procedure is implemented in cyclical or noncyclical periods independent from implementing a concrete reverse gear process.

8. Method according to claim 7, **characterized in that** the cycle is based on the timeframe or the route profile.

9. Procedure in accordance with at least one of the above mentioned claims, **characterized in that** the procedure will be aborted immediately if the control and regulating device has communicated the request to another change-ratio-process.

## Revendications

1. Procédé pour déterminer le point d'application sur la course de fermeture d'un embrayage d'une boîte de vitesses automatisée à marche arrière non synchronisée auquel l'embrayage commence à transmettre un couple, **caractérisé en ce que** le point d'application est défini par le point de la course de fermeture de l'embrayage auquel le couple transmis par l'embrayage est assez grand pour déplacer les dents (3) d'un baladeur (1) par rapport aux dents (4) d'un corps d'embrayage (2) d'un pignon de marche arrière alors qu'elles sont en position dent sur dent.

2. Procédé selon la revendication 1, **caractérisé par** les pas de procédé suivants :
- ouvrir l'embrayage (pas 10)
- engagement puis désengagement d'une vitesse synchronisée afin de freiner un arbre d'entrée ou un arbre intermédiaire de la boîte de vitesses (pas 20);
- déplacement d'un baladeur de marche arrière sur un arbre de la boîte de vitesses jusqu'à ce qu'il s'appuie contre un corps d'embrayage de marche arrière relié à un pignon de marche arrière (pas 30);
- contrôler pour savoir si le baladeur de marche arrière est engrené avec le corps d'embrayage de marche arrière, et donc si la marche arrière est engagée (pas 40);
- si la marche arrière est engagée, aiguillage vers le pas 90;
- si la marche arrière n'est pas engagée, fermeture de l'embrayage jusqu'à un point d'application prédéterminé (pas 50);
- contrôler pour savoir si le baladeur de marche arrière est engrené avec le corps d'embrayage de marche arrière, et donc si la marche arrière est engagée (pas 60);
- si la marche arrière n'est pas encore engagée, continuer à fermer l'embrayage (pas 70) et aiguiller vers le pas 60;
- si la marche arrière est engagée, enregistrer ce point d'application ou la course de réglage de l'embrayage aboutissant au point d'application (pas 80);
- arrêt (pas 90) ou
- désengagement de la marche arrière et aiguillage vers le pas 10 pour exécuter de nouveau le procédé (pas 100).

3. Procédé selon la revendication 1 ou la revendication 2, **caractérisé en ce que** la fermeture de l'embrayage se produit par petits pas, du moins dans le pas (60) du procédé.

4. Procédé selon au moins l'une des revendications 1 à 3, **caractérisé en ce que** ce procédé est exécuté alors que le véhicule est à l'arrêt et que le moteur de propulsion est en marche.

5. Procédé selon la revendication 4, **caractérisé en ce qu'**il est exécuté lorsque l'appareil de commande et de régulation est informé, par des capteurs prévus sur un dispositif de sélection et d'engagement de la boîte de vitesses, du fait que la boîte de vitesses doit être mise au point mort ou dans l'état de marche N, ou que la boîte de vitesses se trouve déjà dans cette position de point mort.

6. Procédé selon au moins l'une des revendications 1 à 5, **caractérisé en ce qu'**il est exécuté à chaque opération d'engagement de la marche arrière.

7. Procédé selon au moins l'une des revendications 1 à 5, **caractérisé en ce qu'**il est exécuté à intervalles cycliques ou acycliques, indépendamment de l'exécution d'un processus concret d'engagement de la marche arrière.

8. Procédé selon la revendication 7, **caractérisé en ce que** le cycle est basé sur le temps ou sur la distance parcourue.

9. Procédé selon au moins l'une des revendications précédentes, **caractérisé en ce que** le procédé est interrompu aussitôt que la demande d'une autre opération de changement de rapport est communiquée à l'appareil de commande et de régulation.
